# EUROPEAN PATENT APPLICATION

(11) **EP 4 708 006 A1**
(43) Date of publication of application: **11.03.2026**
(21) Application number: 25198030.6
(22) Date of filing: 26.08.2025
(51) Int. Cl.: G06F 3/041

(54) **INFORMATION PROCESSING APPARATUS, INFORMATION PROCESSING SYSTEM, INFORMATION PROCESSING METHOD, AND CARRIER MEDIUM**

(30) Priority: 09.09.2024 JP 2024154485
(71) Applicant: Ricoh Company, Ltd., Tokyo 143-8555 (JP)
(72) Inventor: IIJIMA, Hideaki, Tokyo, 143-8555 (JP)
(74) Representative: SSM Sandmair

(57) **Abstract**

An information processing apparatus (10) installed with an operating system (101) that provides an application programming interface includes a touch data reception unit (1002) to receive touch data from multiple touch-screen display devices (20) connected to the information processing apparatus (10), a touch data transmission unit (1005) configured to transmit the touch data to the operating system (101), and a control unit (1000) configured to select one of the multiple touch-screen display devices (20) to allow the touch data from the selected touch-screen display device (20) to be transmitted to the operating system (101). The control unit (1000) transmits, to each of the multiple touch-screen display devices (20), selection status information indicating whether the touch-screen display device (20) is selected.

## Description

### BACKGROUND

### Technical Field

The present disclosure relates to an information processing apparatus, an information processing system, an information processing method, and a carrier medium.

### Related Art

With the development of information technology, a multi-monitor environment in which multiple touch-screen monitors are connected to a personal computer (PC) and used simultaneously is becoming popular to increase work efficiency and visibility of information. When multiple users simultaneously and individually touch the touch-screen monitors (also referred to as "touch-screen display devices") connected to one PC, the PC needs to determine which monitor receives a specific touch input. To handle this inconvenience, a proposed mobile terminal assigns a terminal identifier (ID) to handwriting information input to a monitor so as to allow multiple users to perform handwriting input simultaneously (for example, see Japanese Patent No. 6161544). Further, there is a touch-screen display device with multiple touch screens in which, when a touch on one touch screen is detected, input to the other touch screens is disabled (for example, see Japanese Unexamined Patent Application Publication No. 2018-005681).

The technique disclosed in Japanese Patent No. 6161544 has a drawback that a dedicated controller and a dedicated application program are used for assigning terminal IDs to handwriting input information from multiple users.

The technique disclosed in Japanese Unexamined Patent Application Publication No. 2018-005681 has a drawback that each user operating the touch screen does not recognize whether the input to the touch screen is enabled.

### SUMMARY

The present disclosure described herein provides an information processing apparatus installed with an operating system that provides an application programming interface. The information processing apparatus includes a touch data reception unit to receive touch data from multiple touch-screen display devices connected to the information processing apparatus, a touch data transmission unit to transmit the touch data to the operating system, and a control unit to select one of the multiple touch-screen display devices to allow the touch data from the selected touch-screen display device to be transmitted to the operating system. The control unit transmits, to each of the multiple touch-screen display devices, selection status information indicating whether the touch-screen display device is selected.

The present disclosure described herein provides an information processing system that includes the information processing apparatus described above, and the multiple touch-screen display devices. Each of the multiple touch-screen display devices includes a touch data processing unit to generate the touch data based on touch input and transmit the touch data to the information processing apparatus, a status processing unit to receive the selection status information from the information processing apparatus and process the selection status information, and a control unit to display the selection status information on a display screen.

The present disclosure described herein provides an information processing method executed by an information processing apparatus installed with an operating system that provides an application programming interface. The method includes determining whether touch data is received from one or more of multiple touch-screen display devices connected to the information processing apparatus; selecting one of the multiple touch-screen display devices; transmitting, to each of the multiple touch-screen display devices, selection status information indicating whether the touch-screen display device is selected; and transmitting, to the operating system, the touch data received from the selected touch-screen display device.

The present disclosure described herein provides a carrier medium carrying computer readable codes which, when executed by a computer system, cause the computer system to carry out a method including determining whether touch data is received from one or more of multiple touch-screen display devices connected to the information processing apparatus; selecting one of the multiple touch-screen display devices; transmitting, to each of the multiple touch-screen display devices, selection status information indicating whether the touch-screen display device is selected; and transmitting, to the operating system, the touch data received from the selected touch-screen display device.

According to one aspect of the present disclosure, even when touch input is simultaneously performed on multiple touch-screen display devices connected to one information processing apparatus, the information processing apparatus can process the touch input with built-in functions and allow each user to recognize the status relating to touch input on the touch-screen display device.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a configuration of an information processing system to which an application program is applied;
FIG. 2 is a block diagram illustrating a hardware configuration of an information processing apparatus;
FIG. 3 is a block diagram illustrating a functional configuration of an information processing apparatus;
FIG. 4 is a diagram illustrating a hardware configuration of a touch-screen display device;
FIG. 5 is a block diagram illustrating a functional configuration of a touch-screen display device;
FIG. 6 is a flowchart of control for selecting a touch-screen display device on which touch input is enabled from among multiple touch-screen display devices;
FIG. 7 is a flowchart of control for maintaining the selection status of a touch-screen display device on which touch input is enabled from among multiple touch-screen display devices;
FIG. 8 is a diagram illustrating a setting screen for setting the duration of the selected status of a touch-screen display device on which touch input is enabled;
FIG. 9A is a diagram illustrating a setting screen for setting permission priorities for touch input among touch-screen display devices;
FIG. 9B is a diagram illustrating another setting screen for setting permission priorities for touch input among touch-screen display devices;
FIG. 10 is a flowchart of control for switching the selection status indicating that touch input is enabled, from the current touch-screen display device to a higher-priority touch-screen display device;
FIGS. 11A and 11B are diagrams each illustrating a display screen displayed on a touch-screen display device, indicating whether the touch-screen display device currently in use by a user is selected by the information processing apparatus illustrated in FIG. 3 or an application program;
FIG. 12A to 12C are schematic diagram illustrating a compositing process by the information processing apparatus illustrated in FIG. 3 or the application program to generate the display screen of FIG. 11A or 11B;
FIGS. 13A to 13C are schematic diagrams each illustrating a compositing process by the touch-screen display device illustrated in FIG. 5 to generate the display screen of FIG. 11A or 11B;
FIG. 14A is a flowchart of a process of generating the screen illustrated in FIG. 13C; and
FIG. 14B is a flowchart of another process of generating the screen illustrated in FIG. 13C.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

In the following description, multiple touch-screen display devices are connected to an information processing apparatus, such as a PC, and the touch-screen display devices are made operable with the built-in functions of the information processing apparatus. Further, the individual touch-screen display device allows the user to recognize the status of touch input performed thereon. The operation of the information processing apparatus may be implemented by an application program, or may be implemented by, for example, hardware or firmware. The following description concerns an information processing system in which multiple touch-screen display device are connected to one information processing apparatus, such as a PC, and an application program is installed on the information processing apparatus, but the embodiments are not limited to thereto. The application program described below may be applied to an output device, such as a projector, an interactive white board (IWB), or digital signage; or other device, such as a medical device, a networked home appliance, or a game console to achieve simultaneous use by multiple touch-screen display devices. An IWB is an electronic whiteboard to allow mutual communication. Examples of a "touch-screen display device" includes a portable device and a wearable device.

In the following description, a "touch-screen display device" refers to a display device with a touch screen and may also be referred to as a "monitor with a touch screen," a "touch-screen monitor," a "touch-screen display," a "touch-screen device," a "touch monitor," a "touch display," or a "touch screen." An information processing apparatus, such as a personal computer (PC), may be referred to as a "source apparatus," an "external apparatus," or "external device." A monitor may be referred to as a "display device," a "display," a "screen," or an "external display device." No distinction may be made between an application and a program, and an application implemented by one or more programs may be referred to as an "application program," "application," or "program," or similar terminology.

### System Configuration

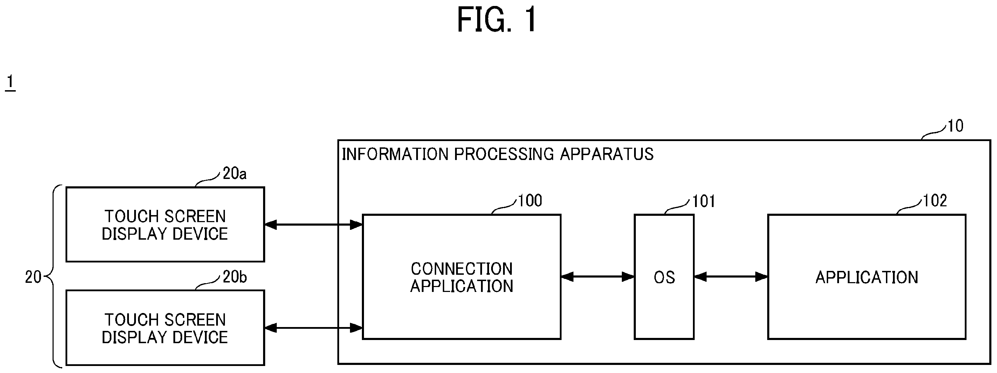

FIG. 1 is a diagram illustrating a configuration of an information processing system to which an application program is applied.

The information processing system 1 includes an information processing apparatus 10 connected to touch-screen display devices 20a and 20b (collectively referred to as touch-screen display devices 20) in a wired or wireless manner. The information processing apparatus 10 includes a connection application 100 for connecting to the touch-screen display devices 20, an operating system (OS) 101, and one or more other applications 102 that support touch input performed by a user (may be referred to as the "touch-supporting applications 102" in the following description).

When receiving touch input on the touch screen, the touch-screen display device 20 transmits data indicating the touch input, such as the touch position (may be referred to as touch data in the following description), to the connection application 100 included in the information processing apparatus 10.

The connection application 100 performs certain processing on the touch data received from the touch-screen display device 20, and then transmits the processed touch data to the OS 101 by using an application programming interface (API) that is built in the OS 101.

This processing will be described later.

The OS 101 transmits the touch data received from the connection application 100 to the touch-supporting application 102 according to the specifications of the OS 101.

### Configuration of Information Processing Apparatus

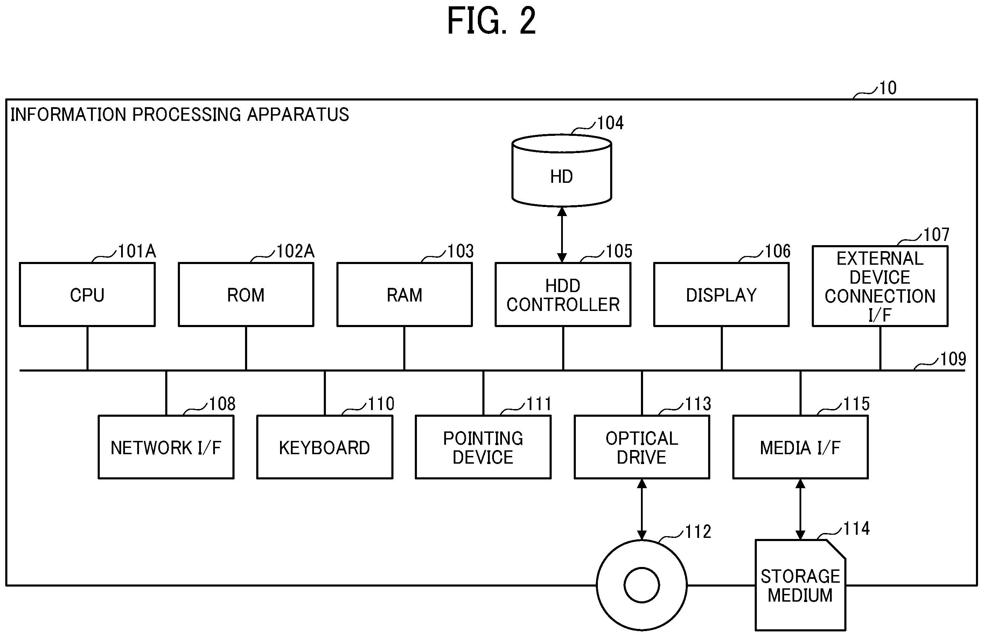

FIG. 2 is a block diagram illustrating a hardware configuration of the information processing apparatus 10. The information processing apparatus 10 is implemented by a computer, and includes a central processing unit (CPU) 101A, a read-only memory (ROM) 102A, a random-access memory (RAM) 103, a hard disk (HD) 104, a hard disk drive (HDD) controller 105, a display 106, an external device connection interface 107, a network interface 108, a bus line 109, a keyboard 110, a pointing device 111, an optical storage medium 112, an optical drive 113, a storage medium 114, and a media interface 115. "Interface" is denoted as "I/F" in the drawings.

The CPU 101A controls the overall operation of the information processing apparatus 10. The ROM 102A stores a program for controlling the CPU 101A, such as an initial program loader (IPL) to boot the CPU 101A.

The RAM 103 is used as a work area for the CPU 101A. The HD 104 stores various data, such as programs and an OS. The HDD controller 105 controls the reading or writing of various data to or from the HD 104 under the control of the CPU 101A. The display 106 displays various kinds of information, such as a cursor, a menu, a window, characters, and an image. The external device connection interface 107 is an interface for connecting to various external devices. Examples of the external devices include, but are not limited to, a universal serial bus (USB) memory, a printer, and an external display device.

The network interface 108 is an interface for data communication using a communication network. The network interface 108 may be connected to an external display device through a communication network. For example, the bus line 109 is an address bus or a data bus that electrically connects the components, such as the CPU 101A illustrated in FIG. 2, to each other. The keyboard 110 is an input device provided with multiple keys for the user to input, for example, characters, numerals, and various instructions. The pointing device 111 is an example of an input device that allows a user to select or execute various instructions, select a target for processing, or move a cursor being displayed. The optical drive 113 controls the reading or writing of various kinds of data from or to the optical storage medium 112 that is an example of a removable storage medium. Examples of the optical storage medium 112 are a compact disc (CD), a digital versatile disc (DVD), and a BLU-RAY. The media interface 115 controls the reading or writing (storing) of data from or to a storage medium 114, such as a flash memory.

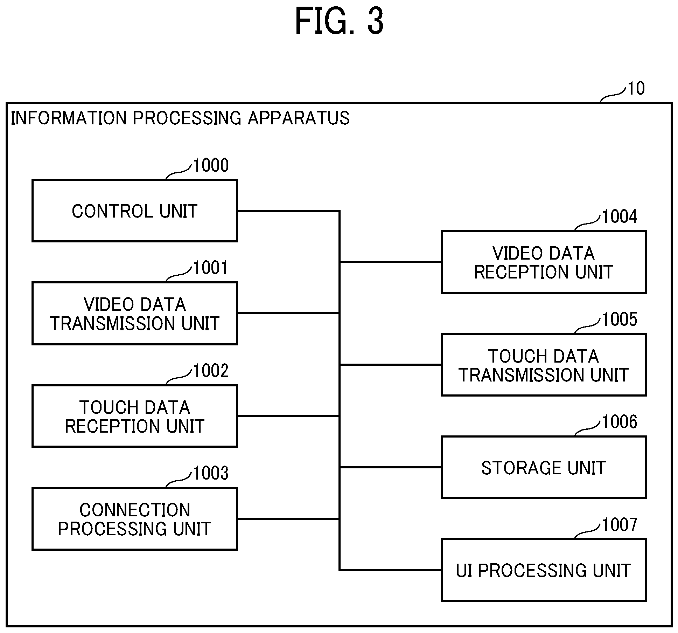

FIG. 3 is a block diagram illustrating a functional configuration of the information processing apparatus 10. The information processing apparatus 10 includes a control unit 1000, a video data transmission unit (image data transmission unit) 1001, a touch data reception unit 1002, a connection processing unit 1003, a video data reception unit (image data reception unit) 1004, a touch data transmission unit 1005, a storage unit 1006, and a user interface (UI) processing unit 1007. These units each provide a means or function implemented by the CPU 101A of the information processing apparatus 10 executing one or more programs stored in a memory such as the HD 104 to control the hardware of the information processing apparatus 10.

The control unit 1000 controls the entire operation of the information processing apparatus 10. For example, the control unit 1000 may select one external display device to enable touch input from among multiple external display devices. The control unit 1000 may control the external display devices such that the touch data received on the selected external display device is transmitted to the OS 101. The control unit 1000 may provide the external display device with selection status information indicating whether to permit touch input. When no external display device to enable touch input is selected, the control unit 1000 may select the external display device that has transmitted the touch data. The control unit 1000 may keep the external display device selected until a predetermined time elapses after the touch data is received, based on the setting information stored in the storage unit 1006. The control unit 1000 may select or switch the external display device to enable touch input among the external display devices based on the setting information in the storage unit 1006. The control unit 1000 may composite the selection status information with data to be transmitted to the external display device. The selection status information indicates the status whether touch input is enabled, and may be referred to as a "selection status" or "status information."

The video data transmission unit 1001 transmits video data to an external display device. The video data reception unit 1004 receives video data from an external display device. The external display device is, for example, the touch-screen display device 20. The data transmitted from the video data transmission unit 1001 and the data received by the video data reception unit 1004 are not limited to video data. The data transmitted by the video data transmitting unit 1001 and the data received by the video data reception unit 1004 may be, for example, image data.

The touch data reception unit 1002 receives video data from an external display device. The touch data transmission unit 1005 transmits the touch data to the OS 101 using an API built in the OS 101.

The connection processing unit 1003 performs processing for connecting to an external display device through a wired or wireless connection. The storage unit 1006 stores the duration of the status of the external display device as being selected. The storage unit 1006 stores setting information relating to the priority order for determining which external display device should be given preference for touch input among multiple external display devices.

The UI processing unit 1007 receives, via the UI, settings for the processing performed by the connection processing unit 1003 and processing related to the storage unit 1006.

### Configuration of Touch-Screen Display Device

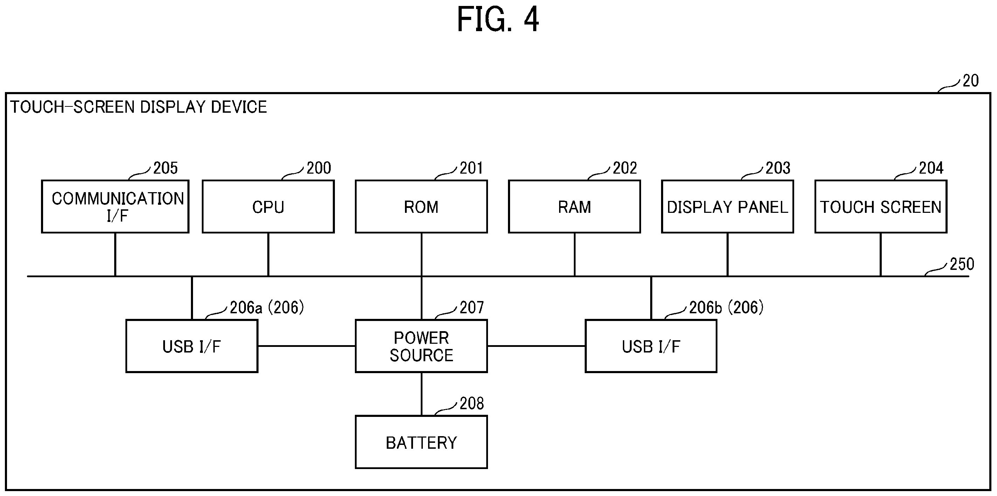

FIG. 4 is a diagram illustrating a hardware configuration of the touch-screen display device 20. The touch-screen display device 20 includes a CPU 200, a ROM 201, a RAM 202, a display panel 203, a touch screen 204, a communication interface 205, USB interfaces 206a and 206b (collectively "USB interfaces 206"), a power source 207, and a battery 208. The number of USB interfaces 206 is merely an example.

The CPU 200 controls the entire operation of the hardware of the touch-screen display device 20. The ROM 201 stores the firmware of the touch-screen display device 20. The RAM 202 is used as a work area for the CPU 200.

The display panel 203 displays various types of information received from an external device connected to the USB interface 206 via at least one of the CPU 200, the ROM 201, and the RAM 202. For example, the external device is the information processing apparatus 10 such as a PC. The various types of information include video data and image data from the external device. The display panel 203 may control, for example, power source, brightness, and contrast of the touch-screen display device 20 using the UI.

When the user performs touch input, the touch screen 204 transmits touch data to the external device connected to the USB interface 206 or the communication interface 205 via at least one of the CPU 200, the ROM 201, and the RAM 202. The touch screen 204 may generate and transmit touch data based on information on the pressure of the touch input.

The touch screen 204 may generate and transmit touch data based on the coordinate information of the touch. The touch screen 204 may be a capacitive touch screen. The touch screen 204 may be an infrared touch screen.

The communication interface 205 is an interface for data communication using a communication network. The communication interface 205 supports both wired network connections and wireless network connections. The communication interface 205 may receive various types of information, such as video data and image data, from an external device wirelessly connected thereto.

The USB interface 206 is an interface for connecting to various external devices. The USB interface 206 supplies power from an external device to the power source 207.

The power source 207 supplies power for the touch-screen display device 20 and charges the battery 208. When the power supplied via the USB interface 206 is insufficient or no power is supplied via the USB interface 206, the battery 208 supplies power to the power source 207 to operate the touch-screen display device 20.

The bus 250 is a bus for electrically connecting the components, such as the CPU 200, illustrated in FIG. 4 to one another.

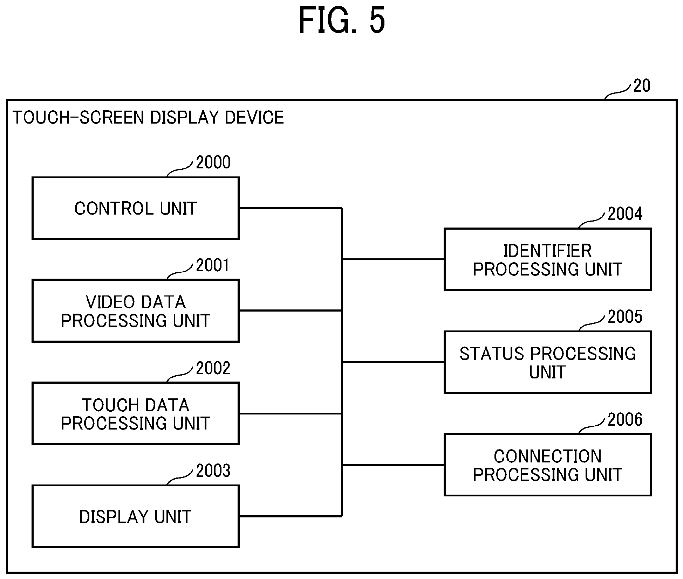

FIG. 5 is a block diagram illustrating a functional configuration of the touch-screen display device 20.

The touch-screen display device 20 includes a control unit 2000, a video data processing unit (image data processing unit) 2001, a touch data processing unit 2002, a display unit 2003, an identifier processing unit 2004, a status processing unit 2005, and a connection processing unit 2006. These units are functions or means that are implemented by the CPU 200 of the touch-screen display device 20 executing one or more programs stored in a memory such as the ROM 201 or the RAM 202 to control the hardware of the touch-screen display device 20.

The control unit 2000 controls the entire operation of the touch-screen display device 20. For example, the control unit 2000 may control the display unit 2003 to display the selection status as to whether touch input is enabled on the touch-screen display device 20 currently in use by the user.

The video data processing unit 2001 performs specific processing on the video data transmitted from the information processing apparatus 10. The specific processing may be compositing, with the video data, a mark indicating the selection status as to whether touch input is enabled on the touch-screen display device 20 currently in use by the user. The data processed by the video data processing unit 2001 is not limited to video data and may be, for example, image data. The video data processing unit 2001 may composite, with the video data, a mark indicating the status indicating whether touch input is enabled on the touch-screen display device 20 currently in use by the user, based on the selection status information received (processed) by the status processing unit 2005. The mark may be referred to as "selection status information."

The touch data processing unit 2002 generates touch data based on, for example, the information on the pressure applied to the touch panel 204 and coordinate information, and transmits the touch data to the information processing apparatus 10.

The display unit 2003 displays video data received from the information processing apparatus 10 on the display panel 203. The video data may be image data. The display unit 2003 may display the image data processed by the image data processing unit 2001 on the display panel 203. The display unit 2000 may display the selection status as to whether touch input is enabled on the touch-screen display device 20 currently in use by the user, based on the processing by the control unit 2003.

The identifier processing unit 2004 receives, from the information processing apparatus 10, the identifier of the touch-screen display device 20 to enable touch input and processes the identifier. The identifier processing unit 2004 determines whether the identifier received from the information processing apparatus 10 matches the identifier of the touch-screen display device 20 currently in use by the user. When the identifier processing unit 2004 determines that the two identifiers match, the touch-screen display device 20 recognizes that touch input is enabled on the touch-screen display device 20 currently in use by the user. In other words, it is recognized that the touch-screen display device 20 currently in use by the user is selected by the information processing apparatus 10.

The status processing unit 2005 receives, from the information processing apparatus 10, the status information indicating whether touch input is enabled on the touch-screen display device 20 currently in use by the user and processes the status information. In other words, the status processing unit 2005 receives, from the information processing apparatus 10, the status information indicating whether the touch-screen display device 20 currently in use by the user is selected by the information processing apparatus 10.

The connection processing unit 2006 performs processing for connecting to the information processing apparatus 10 through a wired or wireless connection.

### Process

A control process performed by the information processing apparatus 10 will be described below.

### A first embodiment is described below.

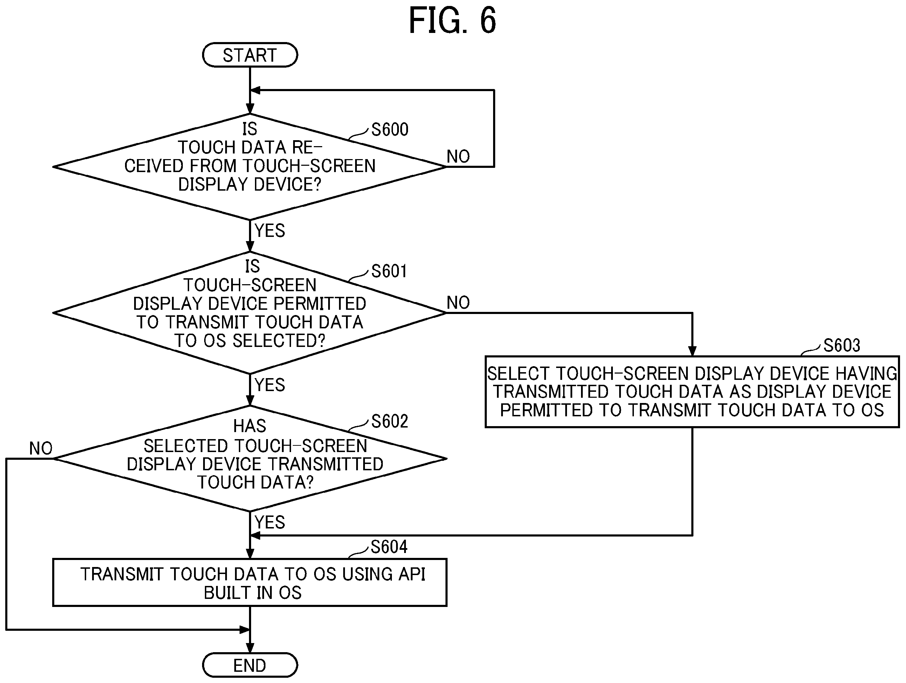

FIG. 6 is a flowchart of control for selecting a touch-screen display device on which touch input is enabled from among multiple touch-screen display devices.

In step S600, the information processing apparatus 10 determines whether touch data is received from the touch-screen display device 20. The information processing apparatus 10 advances the process to step S601 when determining that touch data is received, and executes the operation of step S600 again when determining that touch data is not received.

In step S601, the information processing apparatus 10 determines whether the touch-screen display device 20 permitted to transmit received touch data to the OS 101 is selected. The information processing apparatus 10 advances the process to step S602 when determining that the touch-screen display device 20 has been selected, and advances the process to step S603 when determining that the touch-screen display device 20 has not been selected.

In step S602, the information processing apparatus 10 determines whether the received touch data is transmitted from the selected touch-screen display device 20. When determining that the selected touch-screen display device 20 has transmitted the touch data, the information processing apparatus 10 advances the process to step S604. When determining that the selected touch-screen display device 20 has not transmitted the touch data, the information processing apparatus 10 ends the process of FIG. 6. Thus, the information processing apparatus 10 ends the process without transmitting the received touch data to the OS 101.

In step S603, the information processing apparatus 10 selects the touch-screen display device 20 that has transmitted the touch data as the display device permitted to transmit touch data to the OS 101. Note that touch data is transmitted via the touch data reception unit 1002 to the OS 101. Thus, the information processing apparatus 10 sets the status of the touch-screen display device 20 as being selected to transmit touch data to the OS 101. The control unit 1000 may transmit the selection status information indicating touch input permission to the selected display device.

In step S604, the information processing apparatus 10 transmits the received touch data to the OS 101 using the API built in the OS 101.

In the flowchart of FIG. 6, steps S601, S602, and S603 are examples of the certain processing performed on the touch data received from the touch-screen display device 20, which has been described above relating to the configuration of the information processing system 1.

To summarize the above control process, when none of the touch-screen display devices 20 is selected, the information processing apparatus 10 selects the touch-screen display device 20 that has transmitted the touch data. When one touch-screen display device 20 is selected, the information processing apparatus 10 transmits only the touch data transmitted from the selected touch-screen display device 20 to the OS 101, and does not transmit the touch data transmitted from the other touch-screen display devices 20 than the selected touch-screen display device 20 to the OS 101.

By the above-described control process, even when multiple users simultaneously use the touch-screen display devices 20 individually, the users can perform touch input, including handwriting input, without causing a malfunction of the information processing apparatus 10.

### Maintaining Selection Status

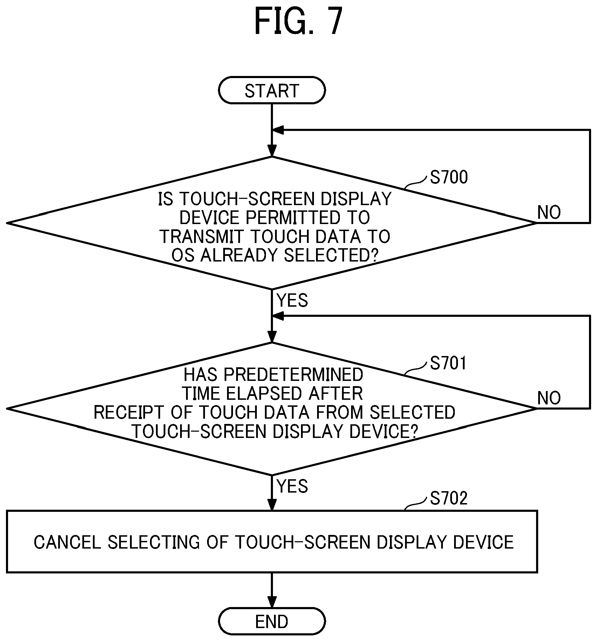

FIG. 7 is a flowchart of control for maintaining the selection status of a touch-screen display device to enable touch input, among multiple touch-screen display devices.

In step S700, the information processing apparatus 10 determines whether the touch-screen display device 20 permitted to transmit received touch data to the OS 101 has been selected. The information processing apparatus 10 advances the process to step S701 when determining that the touch-screen display device 20 has been selected, and again performs the operation of step S700 when determining that the touch-screen display device 20 has not been selected.

In step S701, the information processing apparatus 10 determines whether a predetermined time or longer has elapsed from the receipt of the last touch data of pieces of touch data received within a time domain from the selected touch-screen display device 20. When determining that the predetermined time or longer has elapsed from the receipt of the touch data, the information processing apparatus 10 advances the process to step S702. When determining that the predetermined time or longer has not elapsed from the receipt of the touch data, the information processing apparatus 10 executes step S701 again.

The "predetermined time" and "certain period of time" may be used interchangeably.

In step S702, the information processing apparatus 10 cancels the selected status of the touch-screen display device 20. Thus, the information processing apparatus 10 sets the status of each touch-screen display device 20 as being not selected. In other words, the information processing apparatus 10 permits touch input on all the touch-screen display device 20 connected to the information processing apparatus 10.

To summarize the above control process, the information processing apparatus 10 maintains the selected status until the predetermined time elapses after the last touch data is received from the selected touch-screen display device 20. When the predetermined time has elapsed since the reception of the last touch data from the selected touch-screen display device 20, the information processing apparatus 10 cancels the selected status to set all the touch-screen display devices 20 in the non-selected status.

By the above-described control process, even when multiple users simultaneously use the touch-screen display devices 20 individually, the users can perform touch input, including handwriting input without, causing a malfunction of the information processing apparatus 10.

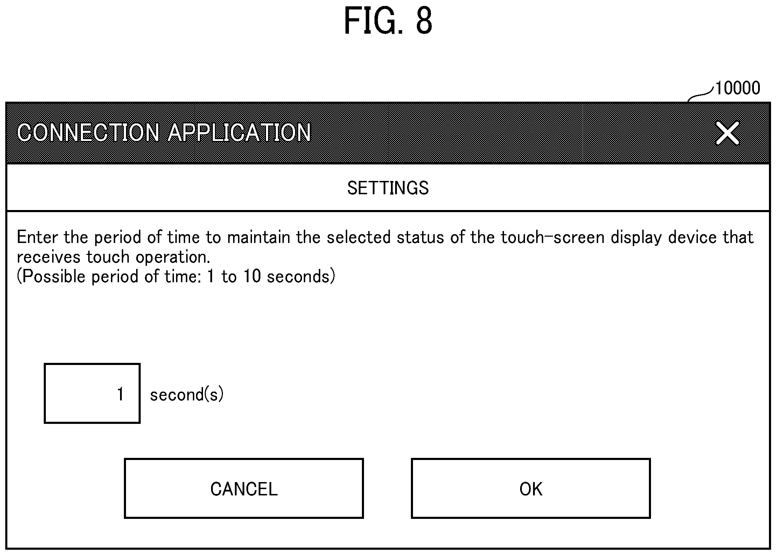

FIG. 8 is a diagram illustrating a setting screen 10000 for setting the duration of the selected status (enabling touch input) of a touch-screen display device.

On the setting screen 10000 displayed by the information processing apparatus 10, the user sets the predetermined time for maintaining the selected status of the touch-screen display device 20.

When users perform touch input at a high frequency in, for example, brainstorming, the selected touch-screen display device 20 needs to be switched at a high frequency. In this case, it is desirable to set the predetermined time for maintaining the selected status of the touch-screen display device 20 to, for example, about 1 second.

By contrast, when only the presenter performs touch input in, for example, a presentation, it is not necessary to switch the selected touch-screen display device 20. When users perform touch inputs at a low frequency in, for example, a presentation, the selected touch-screen display device 20 may be switched at a low frequency. In this case, it is desirable to set the predetermined time for maintaining the selected status of the touch-screen display device 20 to, for example, about 3 to 5 seconds. This prevents the inconvenience that the permission of touch input is switched to another touch-screen display device 20 while the user is performing handwriting input on the touch-screen display device 20 to enable touch input.

By the above-described control process, even when multiple users simultaneously use the touch-screen display devices 20 individually, the users can perform touch input, including handwriting input without, causing a malfunction of the information processing apparatus 10. In addition, the above-described control process prevents the immediate cancellation of the selected status of the touch-screen display device 20.

### Setting Selection Priorities

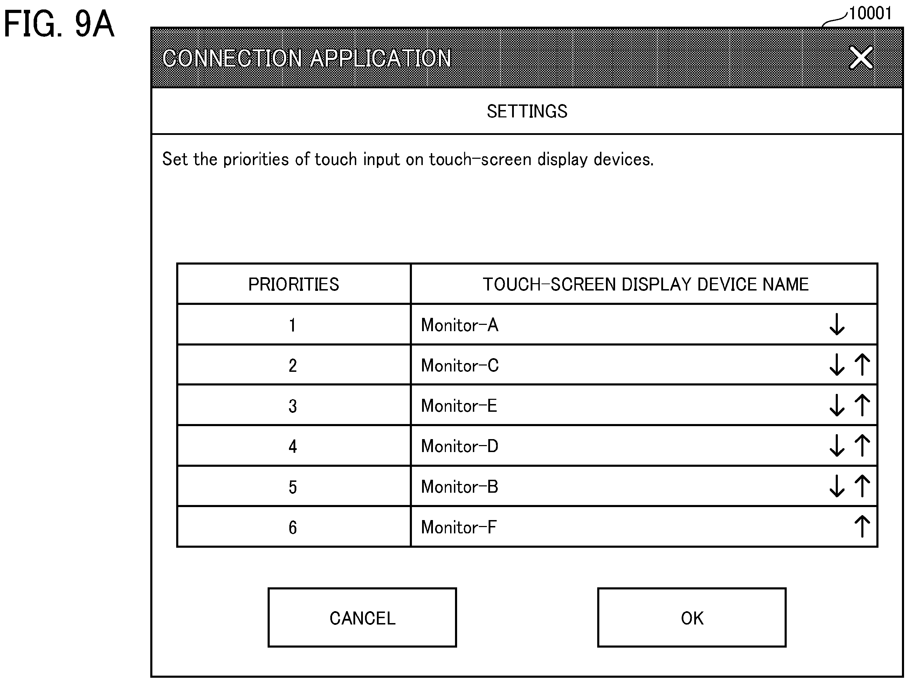

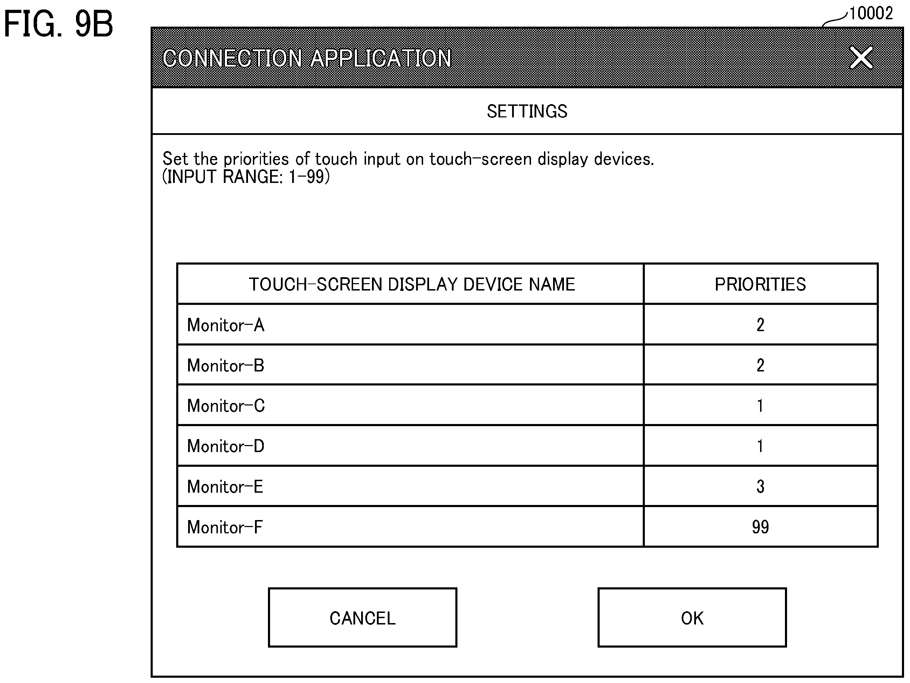

FIGS. 9A and 9B are diagrams each illustrating a setting screen for setting the permission priorities (selection priorities) for touch input among touch-screen display devices.

As illustrated in FIG. 9A, the user sets the permission priorities for touch input among the touch-screen display devices 20 on a setting screen 10001 displayed by the information processing apparatus 10. The user may set different priorities among the touch-screen display devices 20 having different names, for example, by clicking the respective arrows given to the touch-screen display device names on the setting screen 10001.

The user may set, on the setting screen 10001, the priorities such that the permission for touch input is given to the touch-screen display devices 20 in the ascending order of the priority number corresponding to the touch-screen display device name. Alternatively, the user may set, on the setting screen 10001, the priorities such that the permission for touch input is given to the touch-screen display devices 20 in the descending order of the priority number corresponding to the touch-screen display device name.

On the setting screen 10001, the touch-screen display device names are the names of the touch-screen display devices 20 registered in the information processing apparatus 10. The registration in the information processing apparatus 10 may be performed based on the connection record from the touch-screen display device 20 to the information processing apparatus 10. The connection record from the touch-screen display device 20 to the information processing apparatus 10 may be based on, for example, the number of times of connection or the duration of connection between the information processing apparatus 10 and the touch-screen display device 20. The registration in the information processing apparatus 10 may be performed based on the setting information input by the user to the information processing apparatus 10. The setting information input by the user may be a unique name (e.g., media access control (MAC) address or production serial number) of the touch-screen display device 20.

With the above settings, the user can determine the permission priorities for touch input among the touch-screen display devices 20 without duplication.

As illustrated in FIG. 9B, the user sets the permission priorities for touch input among the touch-screen display devices 20 on a setting screen 10002 displayed by the information processing apparatus 10. The difference from FIG. 9A is that the user can assign the same priority to two or more touch-screen display devices 20.

The user may set, on the setting screen 10002, the priorities such that the permission for touch input is given to the touch-screen display devices 20 in the ascending order of the priority number corresponding to the touch-screen display device name. Alternatively, the user may set, on the setting screen 10002, the priorities such that the permission for touch input is given to the touch-screen display devices 20 in the descending order of the priority number corresponding to the touch-screen display device name. For example, when the same priority number is assigned to their respective names of the touch-screen display devices 20 on the setting screen 10002, such touch-screen display devices 20 may not be preferentially given permission for touch input.

On the setting screen 10002, the touch-screen display device names are the names of the touch-screen display devices 20 registered in the information processing apparatus 10. The registration in the information processing apparatus 10 may be performed based on the connection record from the touch-screen display device 20 to the information processing apparatus 10. The connection record from the touch-screen display device 20 to the information processing apparatus 10 may be similar to that described with reference to FIG. 9A.

With the above settings, the user can flexibly determine the permission priorities for touch input among the touch-screen display devices 20.

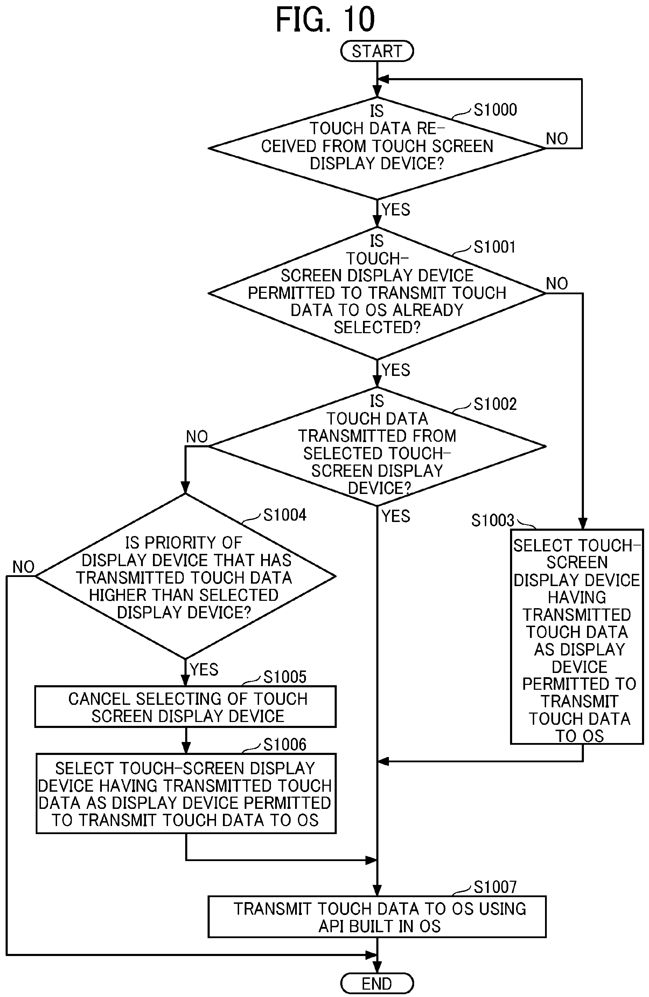

FIG. 10 is a flowchart of control for switching the selection status indicating that touch input is enabled, from the current touch-screen display device to a higher-priority touch-screen display device.

In step S1000, the information processing apparatus 10 determines whether touch data is received from the touch-screen display device 20. The information processing apparatus 10 advances the process to step S1001 when determining that the touch data is received, and executes the operation of step S1000 again when determining that the touch data is not received.

In step S1001, the information processing apparatus 10 determines whether the touch-screen display device 20 permitted to transmit received touch data to the OS 101 has been selected. The information processing apparatus 10 advances the process to step S1002 when determining that the touch-screen display device 20 has been selected, and advances the process to step S1003 when determining that the touch-screen display device 20 has not been selected.

In step S1002, the information processing apparatus 10 determines whether the received touch data is transmitted from the selected touch-screen display device 20. When determining that the selected touch-screen display device 20 has transmitted the touch data, the information processing apparatus 10 advances the process to step S1007. When determining that the selected touch-screen display device 20 has not transmitted the touch data, the information processing apparatus 10 advances the process to step S1004.

In step S1003, the information processing apparatus 10 selects the touch-screen display device 20 that has transmitted the touch data as the touch-screen display device 20 permitted to transmit touch data to the OS 101. Thus, the information processing apparatus 10 sets the status of the touch-screen display device 20 as being selected to transmit touch data to the OS 101.

In step S1004, the information processing apparatus 10 determines whether the touch-screen display device 20 that has transmitted the touch data has a higher priority of touch input than the priority of the selected touch-screen display devices 20. When the priority of touch input of the touch-screen display device 20 that has transmitted touch data is higher than the priority of the selected touch-screen display device 20, the information processing apparatus 10 advances the process to step S1005.

In step S1005, the information processing apparatus 10 cancels the selected status of the selected touch-screen display device 20. Thus, the information processing apparatus 10 sets the status of each touch-screen display device 20 as not selected. In other words, the information processing apparatus 10 permits touch input on all the touch-screen display device 20 connected to the information processing apparatus 10.

In step S 1006, as in S1003, the information processing apparatus 10 selects the touch-screen display device 20 that has transmitted the touch data as the touch-screen display device 20 permitted to transmit touch data to the OS 101. The "touch-screen display device 20 that has transmitted the touch data" is a "touch-screen display device 20 having a high priority of touch input." Thus, the information processing apparatus 10 sets the status of the touch-screen display device 20 as being selected to transmit touch data to the OS 101.

In step S1007, the information processing apparatus 10 transmits the received touch data to the OS 101 using the API built in the OS 101 and ends the process.

In step S1004, when it is determined that the priority of touch input of the touch-screen display device 20 that has transmitted touch data is equal to or lower than the priority of the selected touch-screen display device 20, the process of FIG. 10 is terminated. Thus, the information processing apparatus 10 does not switch the selection status of touch input permission among the touch-screen display devices 20.

In the flowchart of FIG. 10, steps S1001, S1002, S1003, S1004, S1005, and S 1006 are examples of the certain processing performed on the touch data received from the touch-screen display device 20, which has been described above relating to the configuration of the information processing system 1.

To summarize the above process, in a case where touch data is received from the touch-screen display device 20 having a higher permission priority for touch input than the currently selected touch-screen display device 20, the information processing apparatus 10 switches the selection status regarding touch input permission to the touch-screen display device 20 having the higher permission priority so as to transmit the received touch data to the OS 101. When the information processing apparatus 10 receives touch data from the touch-screen display device 20 having a lower priority than the selected touch-screen display device 20, the information processing apparatus 10 does not transmit the received touch data to the OS 101. When the information processing apparatus 10 receives touch data from the touch-screen display device 20 having the same priority as that of the selected touch-screen display device 20, the information processing apparatus 10 does not transmit the received touch data to the OS 101.

With the above processing, the information processing apparatus 10 can appropriately transmit touch data to the OS 101 based on the permission priorities for touch input among touch-screen display devices 20 when such permission priorities are set.

A second embodiment is described below.

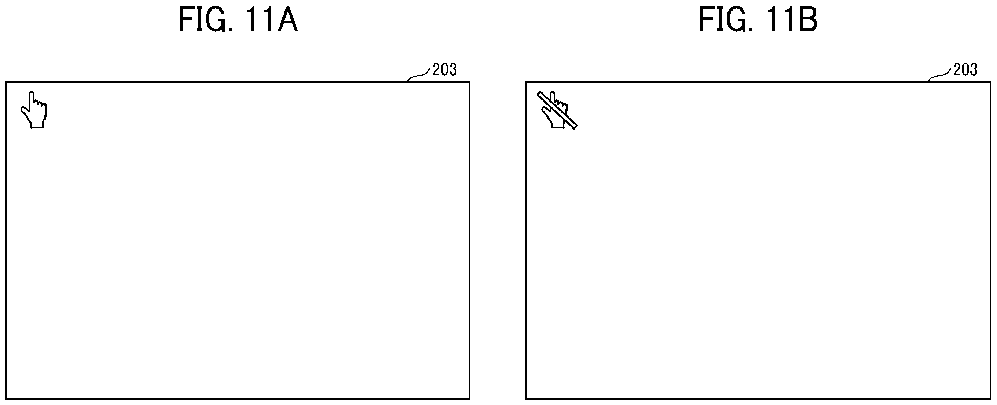

FIGS. 11A and 11B each illustrate a display screen displayed on the touch-screen display device 20, indicating whether the touch-screen display device 20 currently in use by the user is selected by the application program.

FIG. 11A illustrates a display screen of the touch-screen display device 20 in a case where the touch-screen display device 20 currently in use by the user is selected. A status mark indicating that touch input is enabled is displayed on the display panel 203 of the touch-screen display device 20 currently in use by the user.

FIG. 11B illustrates a display screen of the touch-screen display device 20 in a case where the touch-screen display device 20 currently in use by the user is not selected. A status mark indicating that touch input is not enabled is displayed on the display panel 203 of the touch-screen display device 20 currently in use by the user.

The status mark indicating whether touch input is enabled, which is displayed on the display panel 203, may be kept displayed on the display panel 203 as illustrated in FIGS. 11A and 11B. The status mark indicating whether touch input is enabled, which is displayed on the display panel 203, may flash on the display panel 203 at relatively short intervals, such as milliseconds.

The above method allows the user to easily recognize the status as to whether touch input is enabled on the touch-screen display device 20 currently in use by the user without performing touch input on the touch-screen display device 20.

### Display Screen Compositing Example 1

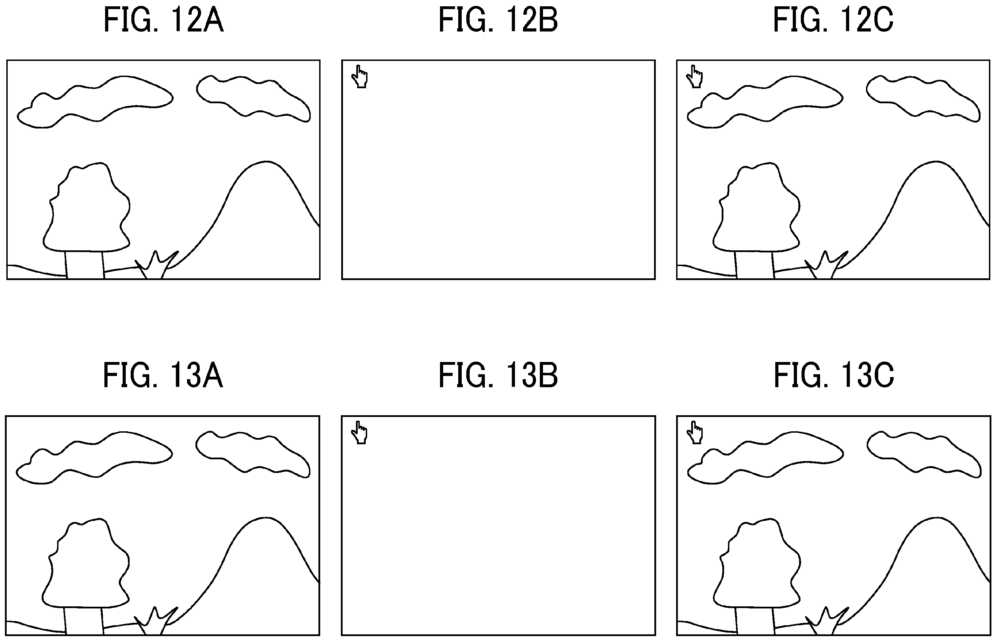

FIG. 12A to 12C are schematic diagram illustrating a compositing process by the information processing apparatus 10 or the application program to generate the display screen of FIG. 11A or 11B. As described below, the data of FIG. 12C is the image displayed on the multiple touch-screen display devices 20.

FIG. 12A illustrates original data transmitted from the information processing apparatus 10. For example, the transmitted data is image data.

FIG. 12B illustrates data generated by the information processing apparatus 10. For example, the generated data is image data indicating that the touch-screen display device 20 currently in use by the user is selected, as illustrated in FIG. 11A. The generated data may be image data indicating that the touch-screen display device 20 currently in use by the user is not selected, as illustrated in FIG. 11B.

FIG. 12C illustrates data transmitted from the information processing apparatus 10 to the touch-screen display device 20. In this case, the transmitted data is image data generated by the information processing apparatus 10 by combining the data of FIG. 12A and the data of FIG. 12B. The information processing apparatus 10 transmits the image data to the touch-screen display device 20 so that the status mark indicating that touch input is enabled on the display panel 203 of the touch-screen display device 20 together with the original data transmitted from the information processing apparatus 10. The information processing apparatus 10 may combine the image data of FIG. 12A and data different from the data of FIG. 12B and transmit the combined image data to the touch-screen display device 20 so that the status mark indicating that touch input is not enabled on the display panel 203 of the touch-screen display device 20 together with the original data transmitted from the information processing apparatus 10.

With the above method, the information processing apparatus 10 selectively combines the data transmitted from the information processing apparatus 10 with the status mark indicating whether touch input is enabled on the touch-screen display device 20. This allows the mark corresponding to the selection status as to whether touch input is enabled to be displayed on each of the touch-screen display devices 20 connected to the information processing apparatus 10. In addition, the above method allows the user to easily recognize the status as to whether touch input is enabled on the touch-screen display device 20 currently in use by the user without performing touch input on the touch-screen display device 20.

### Display Screen Compositing Example 2

FIGS. 13A to 13C are schematic diagrams each illustrating generating the display screen of FIG. 11 by a compositing process by the touch-screen display device 20. As described below, the data of FIG. 13C is the image displayed on the multiple touch-screen display devices 20.

FIG. 13A illustrates original data received by the touch-screen display device 20. For example, the received data is image data. Unlike FIG. 12, the image data is transmitted from the information processing apparatus 10 to the touch-screen display device 20 without being processed.

FIG. 13B illustrates data generated by the touch-screen display device 20. For example, the generated data is image data indicating that the touch-screen display device 20 currently in use by the user is selected, as illustrated in FIG. 11A. The generated data may be image data indicating that the touch-screen display device 20 currently in use by the user is not selected, as illustrated in FIG. 11B.

FIG. 13C illustrates data displayed on the touch-screen display device 20. In this case, the data to be displayed is image data generated by the touch-screen display device 20 by combining the data of FIGS. 13A and the data of FIG. 13B. The touch-screen display device 20 combines the image data of FIG. 13A and the image data of FIG. 13B so that the status mark indicating that touch input is enabled on the display panel 203 of the touch-screen display device 20 together with the original data received by the touch-screen display device 20. The touch-screen display device 20 may combine the data of FIG. 13A and the data different from the data of FIG. 13B so that the status mark indicating that touch input is not enabled on the display panel 203 of the touch-screen display device 20 together with the original data received by the touch-screen display device 20.

With the above method, the touch-screen display device 20 selectively combines the data received by the touch-screen display device 20 with the mark indicating whether touch input is enabled on the touch-screen display device 20. This allows the mark corresponding to the selection status as to whether touch input is enabled to be displayed on each of the touch-screen display devices 20 connected to the information processing apparatus 10. In addition, the above method allows the user to easily recognize the status as to whether touch input is enabled on the touch-screen display device 20 currently in use by the user without performing touch input on the touch-screen display device 20.

### Screen Generation Method

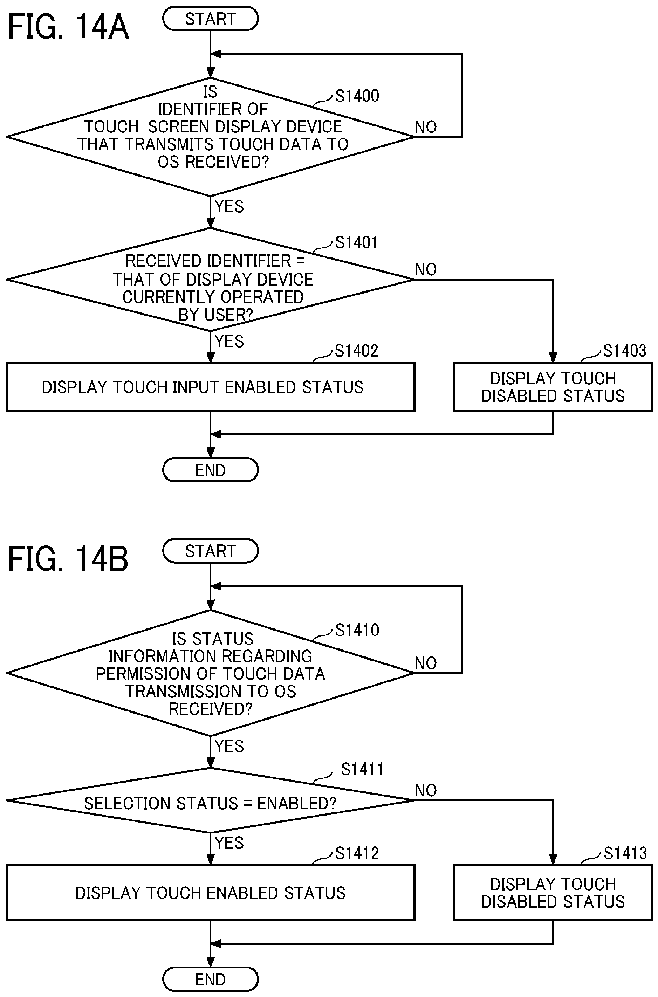

FIG. 14A is a flowchart of a process of generating the screen illustrated in FIG. 13C.

In step S 1400, each touch-screen display device 20 determines whether the identifier of the touch-screen display device 20 to enable touch input (the display device permitted to transmit touch data to the OS 101) has been received from the information processing apparatus 10. The identifier may be a value based on a unique name of the touch-screen display device 20. The identifier may be a value based on a service set identifier (SSID) in a case where the touch-screen display device 20 and the information processing apparatus 10 are wirelessly connected to each other.

The identifier may be transmitted each time the selection status as to whether touch input is enabled is changed by the information processing apparatus 10. The identifier of only one touch-screen display device 20 may be transmitted. Alternatively, the identifiers of two or more touch-screen display devices 20 may be transmitted.

In step S1401, each touch-screen display device 20 determines whether the received identifier matches its own identifier. When the identifiers match, the process is advanced to step S1402. When the identifiers do not match, the process is advanced to step S1403.

In step S1402, the touch-screen display device 20 displays a status mark indicating that touch input is enabled.

In step S1403, the touch-screen display device 20 displays a status mark indicating that touch input is disabled.

In the above control process, the information processing apparatus 10 transmits the same identifier to the multiple touch-screen display device 20, which can reduce the processing load on the information processing apparatus 10.

### Another Screen Generation Method

FIG. 14B is a flowchart of another process of generating the screen illustrated in FIG. 13C.

In step S1410, each touch-screen display device 20 determines whether the status information indicating whether touch input is enabled (whether transmission of touch data to the OS 101 is permitted) has been received from the information processing apparatus 10. The status information may be transmitted each time the selection status as to whether touch input is enabled is changed by the information processing apparatus 10.

In step S1411, each touch-screen display device 20 determines whether the received status information indicates permission of touch input. When it is determined that the status information indicates permission, the process is advanced to step S1412. When it is determined that the status information does not indicate permission, the process is advanced to step S1413.

In step S1412, the touch-screen display device 20 displays a status mark indicating that touch input is enabled.

In step S1413, the touch-screen display device 20 displays a status mark indicating that touch input is disabled.

The control process described above obviates the determination performed by the touch-screen display devices 20 as to the identifier indicating the touch-input enabled display device. Accordingly, the processing load on the touch-screen display device 20 is reduced.

As described above, even when touch input is simultaneously performed on the multiple touch-screen display devices 20 connected to one information processing apparatus 10, the information processing apparatus 10 can process the touch input with built-in functions and allow each user to recognize the status relating to touch input on the touch-screen display device 20.

Any one of the above-described operations may be performed in various other ways, for example, in an order different from the one described above.

The apparatuses or devices described above are merely one example of multiple computing environments that implement the above-described embodiments. In some embodiments, the information processing apparatus 10 may include multiple computing devices, such as a server cluster. The multiple computing devices communicate with one another through any type of communication link including, for example, a network and a shared memory, and perform the processes disclosed in the present disclosure. Similarly, the touch-screen display device 20 may include multiple computing devices configured to communicate with the information processing apparatus 10.

### Aspects of the present disclosure are, for example, as follows.

According to Aspect 1, an information processing apparatus installed with an operating system that provides an application programming interface includes a touch data reception unit to receive touch data from multiple touch-screen display devices connected to the information processing apparatus, a touch data transmission unit to transmit the touch data to the operating system, and a control unit to select one of the multiple touch-screen display devices to allow touch data from the selected touch-screen display device to be transmitted to the operating system. The control unit transmits, to each of the multiple touch-screen display devices, selection status information indicating whether the touch-screen display device is selected.

According to Aspect 2, in the information processing apparatus of Aspect 1, in a case where none of the multiple touch-screen display devices is selected, the control unit selects a first touch-screen display device of the multiple touch-screen display devices in response to receiving first touch data from the first touch-screen display device.

According to Aspect 3, in the information processing apparatus of claim 2, the control unit keeps the first touch-screen display device selected until a predetermined time elapses after the first touch data is received from the first touch-screen display device.

According to Aspect 4, the information processing apparatus of any one of Aspects 1 to 3 further includes a storage unit to store setting information relating to selection priorities among the multiple touch-screen display devices, and the control unit selects one of the multiple touch-screen display devices based on the setting information when two or more pieces of touch data are simultaneously received from the multiple touch-screen display devices.

According to Aspect 5, the information processing apparatus of Aspect 2 or 3 further includes a storage unit to store setting information relating to selection priorities among the multiple touch-screen display devices, and in a case where a second touch-screen display device of the multiple touch-screen display devices has a higher selection priority than the selection priority of the first touch-screen display device currently selected, the control unit selects the second touch-screen display device in response to receiving second touch data from the second touch-screen display device.

According to Aspect 6, the information processing apparatus of any one of Aspects 1 to 5 further includes an image data transmission unit to transmit image data to the multiple touch-screen display devices. The control unit composites the selection status information with the image data to be transmitted to the multiple touch-screen display devices to generate composite data, and transmits the composite data to the multiple touch-screen display devices.

Aspect 7 concerns a carrier medium carrying computer readable codes which, when executed by an information processing apparatus installed with an operating system that provides an application programming interface, cause the information processing apparatus to carry out a method. The method includes receiving touch data from multiple touch-screen display devices; transmitting the touch data to the operating system; selecting one of the multiple touch-screen display devices to allow touch data from the selected touch-screen display device to be transmitted to the operating system; and transmitting, to each of the multiple touch-screen display devices, selection status information indicating whether the touch-screen display device is selected.

Aspect 8 concerns an information processing method executed by an information processing apparatus installed with an operating system that provides an application programming interface. The method includes receiving touch data from multiple touch-screen display devices; transmitting the touch data to the operating system; selecting one of the multiple touch-screen display devices to allow touch data from the selected touch-screen display device to be transmitted to the operating system; and transmitting, to each of the multiple touch-screen display devices, selection status information indicating whether the touch-screen display device is selected.

According to Aspect 9, a touch-screen display device to be connected to an information processing apparatus includes a touch data processing unit to generate touch data based on touch input and transmit the touch data to the information processing apparatus; a status processing unit to receive, from the information processing apparatus, selection status information indicating whether the touch-screen display device is selected, and process the selection status information; and a control unit to control the touch-screen display device to display the selection status information on a display screen.

According to Aspect 10, the touch-screen display device of Aspect 9 includes an image data processing unit to composite the touch data with the selection status information to generate composite data. The control unit controls the touch-screen display device to display the composite data on the display screen.

Aspect 11 concerns an information processing system including an information processing apparatus and multiple touch-screen display devices connected to the information processing apparatus. The information processing apparatus is installed with an operating system that provides an application programming interface and includes a touch data reception unit to receive touch data from the multiple touch-screen display devices, a touch data transmission unit to transmit the touch data to the operating system, and a control unit to select one of the multiple touch-screen display devices to allow touch data from the selected touch-screen display device to be transmitted to the operating system. The control unit transmits, to each of the multiple touch-screen display devices, selection status information indicating whether the touch-screen display device is selected. Each of the multiple touch-screen display devices includes a touch data processing unit to generate the touch data based on touch input and transmit the touch data to the information processing apparatus, a status processing unit to receive the selection status information from the information processing apparatus and process the selection status information, and a control unit to control the touch-screen display device to display the selection status information on a display screen.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid-state memory device.

## Claims

1. An information processing apparatus (10) installed with an operating system (101) that provides an application programming interface, the information processing apparatus (10) comprising:
a touch data reception unit (1002) configured to receive touch data from multiple touch-screen display devices (20) connected to the information processing apparatus (10);
a touch data transmission unit (1005) configured to transmit the touch data to the operating system (101); and
a control unit (1000) configured to select one of the multiple touch-screen display devices (20) to allow the touch data from the selected touch-screen display device (20) to be transmitted to the operating system (101),
wherein the control unit (1000) is configured to transmit, to each of the multiple touch-screen display devices (20), selection status information indicating whether the touch-screen display device (20) is selected.

2. The information processing apparatus (10) according to claim 1,
wherein, in a case where none of the multiple touch-screen display devices (20) is selected, the control unit (1000) is configured to select a first touch-screen display device (20) of the multiple touch-screen display devices (20) in response to receiving first touch data from the first touch-screen display device (20).

3. The information processing apparatus (10) according to claim 2,
wherein the control unit (1000) is configured to keep the first touch-screen display device (20) selected until a predetermined time elapses after the first touch data is received from the first touch-screen display device (20).

4. The information processing apparatus (10) according to any one of claims 1 to 3, further comprising a storage unit (1006) configured to store setting information relating to selection priorities among the multiple touch-screen display devices (20),
wherein the control unit (1000) is configured to select one of the touch-screen display devices (20) based on the setting information when two or more pieces of touch data are simultaneously received from the multiple touch-screen display devices (20).

5. The information processing apparatus (10) according to claim 2 or 3, further comprising a storage unit (1006) configured to store setting information relating to selection priorities among the multiple touch-screen display devices (20),
wherein, in a case where a second touch-screen display device (20) of the multiple touch-screen display devices (20) is higher in selection priority than the first touch-screen display device (20) currently selected, the control unit (1000) is configured to select the second touch-screen display device (20) in response to receiving second touch data from the second touch-screen display device (20).

6. The information processing apparatus (10) according to any one of claims 1 to 5, further comprising an image data transmission unit (1001) configured to transmit image data to the multiple touch-screen display devices (20),
wherein the control unit (1000) is configured to composite the selection status information with the image data to be transmitted to the multiple touch-screen display devices (20) to generate composite data, and transmit the composite data to the multiple touch-screen display devices (20).

7. An information processing system (1) comprising:
the information processing apparatus (10) according to any one of claims 1 to 6; and
the multiple touch-screen display devices (20) each of which includes:
a touch data processing unit (2002) configured to generate the touch data based on touch input and transmit the touch data to the information processing apparatus (10);
a status processing unit (2005) configured to receive the selection status information from the information processing apparatus (10) and process the selection status information; and
a control unit (2000) configured to display the selection status information on a display screen.

8. An information processing method executed by an information processing apparatus (10) installed with an operating system (101) that provides an application programming interface, the method comprising:
determining (S601) whether touch data is received from one or more of multiple touch-screen display devices (20) connected to the information processing apparatus (10);
selecting (S603) one of the multiple touch-screen display devices (20);
transmitting (S603), to each of the multiple touch-screen display devices (20), selection status information indicating whether the touch-screen display device (20) is selected; and
transmitting (S603), to the operating system (101), the touch data received from the selected touch-screen display device (20).

9. A carrier medium carrying computer readable codes which, when executed by a computer system, cause the computer system to carry out the method according to claim 8.
